# EUROPÄISCHE PATENTANMELDUNG

(11) **EP 2 870 841 A1**
(43) Veröffentlichungstag der Anmeldung: **13.05.2015**
(21) Anmeldenummer: 14191624.7
(22) Anmeldetag: 04.11.2014
(51) Int. Cl.: A01B 49/02, A01B 49/06

(54) **Striegel für Bodenbearbeitungsgeräte**

(30) Priorität: 07.11.2013 DE 102013222604
(71) Anmelder: Güttler GmbH, 73230 Kirchheim/Teck (DE)
(72) Erfinder: Güttler, Hans, 73230 Kirchheim/Teck (DE)
(74) Vertreter: Patentanwälte Ruff, Wilhelm, Beier, Dauster & Partner

(57) **Zusammenfassung**

1.2 Die Erfindung betrifft einen Striegel für Bodenbearbeitungsgeräte, insbesondere Sämaschinen, mit mehreren, quer zur Bewegungsrichtung des Bodenbearbeitungsgeräts nebeneinander angeordneten federnden Zinken 12 mit jeweils einem Federabschnitt und einem im Wesentlichen geradlinigen Abschnitt, der sich ausgehend vom Federelement bis zu einem Eingriffspunkt in einer Bodenoberfläche erstreckt, bei dem mehrere Druckrollen 20 vorgesehen sind, die so zu den Zinken angeordnet sind, dass im Fahrbetrieb und in einer Seitenansicht quer zur Bewegungsrichtung gesehen der im Wesentlichen geradlinige Abschnitt der Zinken tangential an einem Umkreis der Druckrollen anliegt oder in den Umkreis hineinragt.

## Beschreibung

Die Erfindung betrifft einen Striegel für Bodenbearbeitungsgeräte, insbesondere Sämaschinen, mit mehreren, quer zur Bewegungsrichtung des Bodenbearbeitungsgeräts nebeneinander angeordneten, federnden Zinken mit jeweils einem Federabschnitt und einem im Wesentlichen geradlinigen Abschnitt, der sich ausgehend vom Federelement bis zu einem Eingriffspunkt mit einer Bodenoberfläche erstreckt.

Bekannte Striegel weisen an einer quer zur Fahrtrichtung gelagerten Haltestange eine Vielzahl von federnden Zinken auf. Die Federung der Striegelzinken kann durch verschiedene Maßnahmen erreicht werden, nämlich beispielsweise Herstellung des Striegels aus rundem oder rechteckigem Federstahl, wobei dann eine Federwirkung sich durch entsprechende Länge des Zinkens und/oder durch Anbringung einer oder mehrerer Federwindungen in der Nähe des oberen Endes des Zinkens ergeben kann. Weiter sind zweiteilig aufgebaute Striegelzinken bekannt, bei denen das untere Ende relativ steif und massiv ist und die Federung durch ein separates, geeignetes Bauteil bewirkt wird, beispielsweise eine Zug- oder Druckfeder oder auch Federelemente aus Gummi oder anderem elastischem Material. Solche Striegel haben die Aufgabe, für eine Krümelung, eine Einebnung und eine Verstopfungsfreiheit bei Pflanzenrückständen zu sorgen. Problematisch ist hierbei, dass dann, wenn ein Striegel den zu bearbeitenden Boden quer zur Fahrtrichtung einebnen soll, Boden anstauen muss, um eine seitliche Verteilung des Bodens zu erreichen. Kurz gesagt kann ohne Bodenstau kein Einebnen erfolgen. Jede Art von Bodenstau führt aber bei Pflanzenrückständen dazu, dass diese von den Striegelzinken zu Haufen zusammengezogen werden. Das Aufsammeln von Rückständen geht so lange, bis der Staudruck vor dem Striegel so groß wird, dass die Striegelzinken nach oben gedrückt werden. Die mittlerweile angesammelten Pflanzenrückstände werden dabei mehr oder weniger abrupt freigegeben. Nachdem Pflanzenrückstände relativ leicht sind, kann es vor einem Striegelzinken durchaus zu größeren Ansammlungen kommen, bis der Staudruck groß genug wird, um den Striegel gegen die Federwirkung nach oben zu drücken und zu öffnen. Der Striegel kann also regelrechte Haufen von Pflanzenrückständen zusammenziehen, die sich dann später auf dem Boden, beispielsweise einem Saatbett, wiederfinden und sehr unerwünscht sind, weil sie im Fall der Bodenbearbeitung die nachfolgende Saat behindern oder weil sie im Falle einer Sämaschine die unter den Ansammlungen abgelegten Samen beim Aufgehen behindern. Dies wird durch eine Abschattung der Samen bewirkt, durch die sich die keimende Saat regelrecht ans Licht kämpfen muss. Zudem begünstigen solche Ansammlungen von Pflanzenrückständen Pilzerkrankungen und tierische Schädlinge.

Bei der Gestaltung eines Striegels können, um einen Kompromiss zwischen der gewünschten Funktion des Einebnens und der unerwünschten Wirkung des Zusammenziehens von Pflanzenansammlungen zu erreichen, verschiedene Parameter bzw. Faktoren verändert werden, beispielsweise die Anzahl der Zinken, die Ausbildung des unteren Endes der Zinken, die Federhärte der Zinken bzw. der Auflagedruck am Boden sowie die Neigung der Zinken.

Beispielsweise können sogenannte Schwalbenschwanzstriegel eingesetzt werden, bei denen die Striegelzinken an ihrem unteren Ende waagrecht zur Seite gebogen sind, wobei der seitlich abragende Schenkel des Striegelzinkens in der Draufsicht betrachtet schräg nach hinten, also verlierend gestellt ist. Die quer abragenden Enden der Striegel bewirken eine gute Einebnung und Querverteilung des Bodens und arbeiten weitgehend verstopfungsfrei. Sind aber bereits Strohhaufen im Saatbett vorhanden, so werden diese nicht vollständig aufgelöst und sind als solche immer noch vorhanden. Ein erheblicher Nachteil solcher Schwalbenschwanzstriegel ist das Abziehen von feuchten Böden, so dass mit starker Krustenbildung zu rechnen ist, die wiederum das Aufgehen der Saat stark behindert.

Alternativ können beispielsweise auch eine größere Anzahl an Zinken verwendet werden, die vergleichsweise weich ausgebildet sind und eine einstellbare Neigung und einen einstellbaren Auflagedruck erlauben. Problematisch sind hierbei die aufgrund der hohen Zinkenzahl hohen Herstellkosten sowie der Zeitaufwand für die optimale Einstellung der Striegel. Sowohl die Neigung als auch der Auflagedruck spielen eine Rolle und müssen eingestellt werden. Dies verursacht auch bei wechselnden Verhältnissen innerhalb einer zu bearbeitenden Fläche Kompromisse.

Aus der deutschen Offenlegungsschrift DE 43 13 941 A1 ist ein Bodenbearbeitungsgerät mit federnden Zinken bekannt, das aber nicht als Striegel, sondern als Grubber mit gebogenen Federzinken ausgebildet ist, die durch den Boden bewegt werden. Seitlich zu den gebogenen Federzinken sind Druckrollen angeordnet. Die gebogenen Federzinken ragen deutlich in den Umkreis der Druckrollen hinein, gesehen in einer Seitenansicht senkrecht zur Fahrtrichtung.

Mit der Erfindung soll ein verbesserter Striegel für Bodenbearbeitungsgeräte bereitgestellt werden.

Erfindungsgemäß ist hierzu ein Striegel mit den Merkmalen von Anspruch 1 vorgesehen.

Bei einem Striegel für Bodenbearbeitungsgeräte mit mehreren, quer zur Bewegungsrichtung des Bodenbearbeitungsgeräts nebeneinander angeordneten federnden Zinken sind somit mehrere Druckrollen vorgesehen, die so zu den Zinken angeordnet sind, dass im Fahrbetrieb und in einer Seitenansicht senkrecht zur Bewegungsrichtung gesehen der im Wesentlichen geradlinige Abschnitt der Zinken tangential an einem Umkreis der Druckrollen anliegt oder in den Umkreis hineinragt. Indem somit die Aufstandsflächen der Druckrollen in der Seitenansicht unmittelbar hinter oder auf Höhe der Eingriffspunkte der Zinken mit einer Bodenoberfläche angeordnet sind, werden Pflanzenrückstände, die durch den Striegel aufgestaut werden, von den Druckrollen kontinuierlich unter dem Striegelzinken herausgezogen. Der Striegelzinken bzw. alle Zinken des Striegels können somit so ausgebildet und eingestellt werden, dass sie den Boden anstauen und somit eine gute Krümelung und eine gute Querverteilung des Bodens bewirken. Gleichzeitig angestaute Pflanzenrückstände und dadurch verursachte Verstopfungen werden aber durch die Druckrollen vermieden und die Pflanzenrückstände werden nicht in Haufen, sondern kontinuierlich hinter dem Bodenbearbeitungsgerät abgelegt. Die Pflanzenrückstände stören somit weder die folgende Saat, wenn der Striegel lediglich zur Bodenbearbeitung eingesetzt wird, noch behindern sie das Aufgehen der Saat, wenn der Striegel an einer Sämaschine eingesetzt wird. Die Druckrollen können dabei frei laufen, also nur von ihrem Eigengewicht belastet sein, oder auch über geeignete Elemente in Richtung auf den Boden belastet sein, beispielsweise mit dem Gewicht des Bodenbearbeitungsgeräts. Der im Wesentlichen geradlinige Abschnitt kann im Rahmen der Erfindung dabei leicht gekrümmt sein, sowohl konkav als auch konvex, wobei eine geradlinige Ausbildung bevorzugt ist. Ausgehend vom Eingriffspunkt mit der Bodenoberfläche kann das untere Ende des Striegelzinkens abgekröpft sein, vorzugsweise verlierend entgegen der Bewegungsrichtung. Gemäß der Erfindung erstreckt sich eine Aufstandsfläche der Druckrollen ausgehend von dem Eingriffspunkt eines Zinkens entgegen der Bewegungsrichtung nach hinten. Gemäß der Erfindung sind Mittel zum Verschieben der Aufstandsflächen der Druckrollen relativ zu den Eingriffspunkten der Zinken wenigstens in und entgegen der Bewegungsrichtung vorgesehen.

Durch die erfindungsgemäße Ausbildung eines Striegels wird beispielsweise auch bei sehr feuchten Bodenverhältnissen verhindert, dass es zu einer Brückenbildung von Boden zwischen jeweils zwei benachbarten Druckrollen kommt. Wenn beispielsweise an zwei benachbarten Druckrollen sehr viel Boden anklebt, so verhindern die zwischen den Druckrollen angeordneten Zinken eine Brückenbildung. Ausräumer an den Druckrollen können somit entfallen. Durch die Erfindung kann erreicht werden, dass um das freie Ende der Zinken herumgebogene und mitgeschleppte Pflanzenreste, beispielsweise längere Gräser oder längere Strohhalme, durch die Druckrollen zuverlässig unter den Zinken herausgezogen werden. Beispielsweise können die Aufstandsflächen der Druckrollen und die Eingriffspunkte der Zinken je nach der erwarteten Ausbildung von Pflanzenrückständen zueinander verschoben werden.

In Weiterbildung der Erfindung ist zu beiden Seiten eines Zinkens jeweils eine Druckrolle angeordnet.

Auf diese Weise können vor bzw. unter dem Zinken angesammelte Pflanzenrückstände zu beiden Seiten der Aufstandsfläche des Zinkens durch die jeweilige Druckrolle herausgezogen werden. Dadurch werden Verstopfungen vermieden und die angesammelten Pflanzenrückstände werden kontinuierlich herausgezogen und gleichmäßig auf dem Boden verteilt.

In Weiterbildung der Erfindung sind die Druckrollen und die Zinken quer zur Bewegungsrichtung gesehen jeweils fluchtend zueinander angeordnet, wobei zwischen zwei Zinken jeweils eine Druckrolle angeordnet ist.

Durch die fluchtende Anordnung von Zinken sowie Druckrollen kann der mechanische Aufbau vereinfacht werden, da sowohl für die Zinken als auch für die Druckrollen jeweils nur eine gemeinsame, quer zur Bewegungsrichtung verlaufende Haltestange benötigt wird.

In Weiterbildung der Erfindung sind quer zur Bewegungsrichtung gesehen die Aufstandsflächen der Druckrollen von den Eingriffspunkten der Zinken in einem Bereich zwischen 3 cm und 10 cm beabstandet.

Bei einer solchen Bemessung des Abstandes zwischen Zinken und Druckrollen kann zuverlässig erreicht werden, dass Pflanzenansammlungen, beispielsweise Strohansammlungen, vor bzw. unter den Zinken vermieden werden. Die Anordnung von Druckrollen und Zinken kann, von oben gesehen, auch extrem asymmetrisch gewählt werden, indem beispielsweise auf der einen Seite eines Zinkens eine Druckrolle sehr nahe an einem Zinken und auf der anderen Seite eine weitere Druckrolle sehr weit entfernt von einem Zinken angeordnet ist.

In Weiterbildung der Erfindung sind die Druckrollen drehbar auf einer gemeinsamen, quer zur Bewegungsrichtung angeordneten ersten Haltestange angeordnet und die Zinken sind an einer gemeinsamen, quer zur Bewegungsrichtung angeordneten zweiten Haltestange angeordnet, wobei die erste und die zweite Haltestange relativ zu einem Maschinengestell unabhängig voneinander einstellbar sind.

Durch Vorsehen solcher gemeinsamer Haltestangen wird ein kompakter Aufbau bei geringem konstruktivem Aufwand erzielt. Die unabhängige Einstellbarkeit einer Position der ersten Haltestange und einer Position der zweiten Haltestange relativ zu einem Maschinengestell, mithin also die unabhängige Einstellbarkeit der Druckrollen und der Zinken, erleichtert Einstellungen an dem erfindungsgemäßen Striegel enorm. Sowohl die Druckrollen als auch die Zinken können jeweils einzeln und für sich eingestellt werden, ohne dass man dabei die jeweilige Einstellung des anderen Elements unmittelbar in Betracht ziehen muss. Es ergeben sich darüber hinaus große Verstellwege und Spielräume bei der Einstellung. Vor allem aber kann sich eine Bedienperson auf die Druckrollen oder die Zinken konzentrieren und diese dann unabhängig von den Zinken bzw. den Druckrollen einstellen. Beispielsweise kann der Druck auf die Zinken maximal gewählt werden und der Druck auf die Druckrollen minimal bzw. die Druckrollen können sogar nur durch ihr Eigengewicht frei laufend eingestellt werden. Eine solche Einstellung kann beispielsweise bei nassen Böden vorteilhaft sein. Der flach eingestellte und unter Druck stehende Zinken zerteilt dann grobe Bodenagglomerationen. Die drucklos laufende Druckrolle erzeugt keine Klumpen sondern krümelt im Gegenteil den nassen Boden. Durch die unabhängige Einstellbarkeit kann beispielsweise eine Bedienperson zunächst die Zinken einstellen, bis die Arbeit der Zinken den Vorstellung der Bedienperson entspricht, danach kann sich die Bedienperson den Druckrollen widmen, ohne dass eine Veränderung der Einstellung der Druckrollen die Arbeit der Zinken beeinflusst. Auch ungeübte Bedienpersonen können auf diese Weise die für den gerade vorliegenden Boden optimale Einstellung schnell und einfach finden. Die erste Haltestange und auch die zweite Haltestange können dabei auch um eine quer zur Fahrtrichtung liegende Achse schwenkbar gehalten sein, so dass beispielsweise eine Neigung der Zinken und, aufgrund der federnden Ausgestaltung der Zinken, auch eine Druckbelastung der Zinken eingestellt bzw. verändert werden kann.

In Weiterbildung der Erfindung ist die erste Haltestange mittels wenigstens eines Trägers gehalten, der sich von einem Maschinengestell aus nach hinten in den Bereich zwischen den Zinken erstreckt.

In Weiterbildung der Erfinder ist die zweite Haltestange mittels wenigstens eines Trägers gehalten, der sich von einem Maschinengestell aus nach hinten erstreckt.

In Weiterbildung der Erfinder sind die erste Haltestange und/oder die zweite Haltestange schwenkbar an einem freien Ende des jeweils zugeordneten Trägers angeordnet und relativ zum Träger in unterschiedlichen Winkelstellungen festlegbar.

Speziell sind die erste Haltestange und/oder die zweite Haltestange um eine quer zur Fahrtrichtung liegende Achse schwenkbar an dem freien Ende des jeweils zugeordneten Trägers angeordnet. Durch eine Schwenkbewegung der Haltestange lässt sich dadurch nicht nur eine Position der Druckrollen bzw. der Enden der Zinken auf der Bodenoberfläche einstellen, sondern auch eine Belastung der Druckrollen bzw. der Zinken in Richtung auf die Bodenoberfläche. Im Falle der Zinken, die ja federnd ausgebildet sind, lässt sich durch ein Schwenken der zweiten Haltestange auch eine Neigung der Zinken zur Bodenoberfläche verstellen.

In Weiterbildung der Erfindung sind der Träger für die erste Haltestange und/oder der Träger für die zweite Haltestange schwenkbar an einem ersten Querträger des Maschinengestells angelenkt und in unterschiedlichen Höhenpositionen an einem zweiten, vom ersten Querträger beabstandeten Querträger des Maschinengestells festlegbar.

Der Träger für die erste Haltestange und/oder der Träger für die zweite Haltestange sind dabei um eine quer zur Fahrtrichtung und parallel zur Bodenoberfläche liegenden Schwenkachse schwenkbar angelenkt. Das Festlegen der Träger an einem zweiten, vom ersten Querträger beabstandeten Querträger des Maschinengestells dient dabei vor allem zum Einstellen einer Belastung der Druckrollen bzw. der Zinken in Richtung auf die Bodenoberfläche. Wird beispielsweise auf die Festlegung der Träger verzichtet, laufen die Druckrollen nur durch ihr Eigengewicht belastet über die Bodenoberfläche. Wird der Träger an dem zweiten Querträger dahingegen festgelegt, kann eine Druckbelastung in Richtung auf die Bodenoberfläche eingestellt werden. Analog lässt sich eine Druckbelastung der Zinken in Richtung auf die Bodenoberfläche auf diese Weise einstellen.

In Weiterbildung der Erfindung sind Mittel zum Einstellen einer Belastung der Druckrollen und/oder Mittel zum Einstellen einer Belastung der Zinken in Richtung auf den zu bearbeitenden Boden vorgesehen.

In Abhängigkeit der Eigenschaften des zu bearbeitenden Bodens können die Druckrollen entweder unbelastet und damit frei auf dem Boden abrollen oder sie können, beispielsweise mit dem Gewicht des Bearbeitungsgeräts, in Richtung auf den zu bearbeitenden Boden belastet werden. Auch eine Belastung der Zinken in Richtung auf den zu bearbeitenden Boden kann eingestellt werden.

In Weiterbildung der Erfindung ist eine Belastung der Druckrollen und eine Belastung der Zinken unabhängig voneinander einstellbar.

Auf diese Weise kann die Einstellung des erfindungsgemäßen Striegels auch für ungeübte Benutzer wesentlich vereinfacht werden.

In Weiterbildung der Erfindung sind die Druckrollen auf ihrem Außenumfang mit Zacken versehen. Vorteilhafterweise sind die Zacken prismenförmig ausgebildet und eine jeweils radial außenliegende Kante der Zacken fällt in Richtung einer Drehachse der Druckrollen schräg zu einer Seite hin ab.

Die Druckrolle ist vorteilhafterweise nicht als walkendes Gummirad, bestehend aus Felge und Laufkranz, ausgebildet, sondern als sogenannter Prismenring aus Eisen, Stahl, Leichtmetall oder Kunststoff. Eine Ausführung in leichtem Kunststoffmaterial ist dabei besonders vorteilhaft. An der glatten Oberfläche des Kunststoffmaterials klebt weniger Boden an und die Druckrollen sind dann besonders leicht. Durch geeignete Dimensionierung der Druckrollen kann man den Prismenring aus Kunststoff leicht walken lassen, so dass er sich auch bei klebrigem Boden weitgehend selbst reinigt. Eine prismenförmige Ausbildung der Zacken mit pultdachförmiger Gestaltung, so dass also eine jeweils radial außenliegende Kante der Zacken in Richtung einer Drehachse der Druckrollen schräg zu einer Seite hin abfällt, hat anerkanntermaßen den Effekt, dass eine ideale Bodenstruktur hinterlassen wird, die das Aufgehen der Saat begünstigt und weder zum Verkrusten noch zum Verwehen des Bodens neigt. Solche Prismenringe mit einer gezackten Laufkranzform vermitteln auch einen guten Selbstantrieb, da die Zacken in den Boden eingreifen, und haben zum Entfernen der Pflanzenrückstände vor bzw. unter den Striegelzinken auch eine ideale Form, da die Pflanzenrückstände von den Zacken ergriffen werden und nach dem teilweisen Eindringen der Zacken in den zu bearbeitenden Boden dann relativ zum Boden blockiert und damit von den Striegelzinken entfernt werden.

In Weiterbildung der Erfindung ist der Striegel Teil einer Sämaschine, wobei die Druckrollen so angeordnet sind, dass sie auf den von der Sämaschine erzeugten Saatreihen laufen.

Auf diese Weise kann der Boden über der eingebrachten Saat leicht angedrückt werden, so dass ein besserer und gleichmäßigerer Aufgang der Saat gewährleistet ist. Bei Einsatz an einer Sämaschine können die Druckrollen des erfindungsgemäßen Striegels somit eine Doppelfunktion erfüllen.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. Einzelmerkmale, die in den verschiedenen Zeichnungen dargestellt sind, können dabei in beliebiger Weise miteinander kombiniert werden, auch zwischen unterschiedlichen Ausführungsformen, ohne den Rahmen der Erfindung zu überschreiten. In den Zeichnungen zeigen:
- Fig. 1: eine schematische Draufsicht auf einen erfindungsgemäßen Striegel für Bodenbearbeitungsgerät,
- Fig. 2: eine abschnittsweise Seitenansicht des Striegels der Fig. 1,
- Fig. 3: eine schematische Seitenansicht eines Striegels gemäß einer weiteren Ausführungsform der Erfindung,
- Fig. 4: eine Draufsicht auf eine Druckrolle, wie sie bei einer bevorzugten Ausführungsform der Erfindung eingesetzt wird,
- Fig. 5: eine Ansicht auf die Schnittebene V-V in Fig. 3,
- Fig. 6: eine Draufsicht auf eine Ausführungsform des erfindungsgemäßen Striegels,
- Fig. 7: eine Ansicht des Striegels der Fig. 6 von vorne, also entgegen der Bewegungsrichtung und
- Fig. 8: eine Seitenansicht des Striegels der Fig. 6.

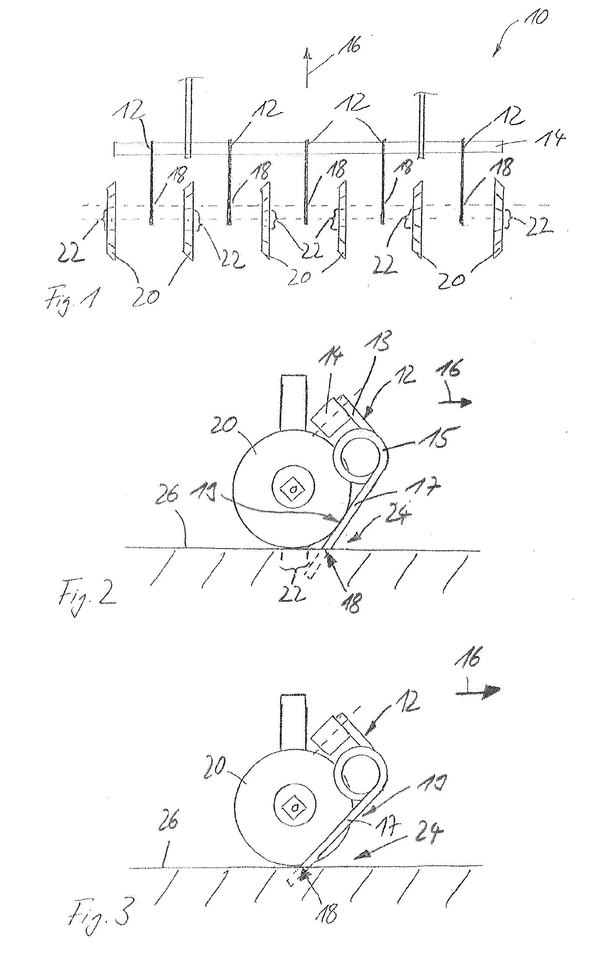

Die schematische Draufsicht der Fig. 1 zeigt einen Striegel 10, der beispielsweise hinter einer nicht dargestellten Sämaschine oder auch alleine eingesetzt werden kann, um eine Bodenbearbeitung vorzunehmen. Die Kombination mit anderen Bodenbearbeitungsgeräten ist selbstverständlich ebenfalls möglich.

Der Striegel 10 weist mehrere Striegelzinken 12 auf, die an einer gemeinsamen Haltestange 14 befestigt sind und die als federnde Zinken ausgebildet sind. Der Striegel 10 wird in einer Bewegungsrichtung über einen zu bearbeitenden Boden bewegt, die mit einem Pfeil 16 angedeutet ist. Die Haltestange 14 ist oberhalb der Bodenoberfläche angeordnet und ein Eingriffspunkt der freien Enden der Zinken 12 oder ein Bereich, in dem das freie Ende der Zinken 12 an der Bodenoberfläche und in den Boden eingreift, ist in Fig. 1 mit der Ziffer 18 bezeichnet. Die Zinken 12 sind quer zur Bewegungsrichtung 16 gesehen in gleichmäßigem Abstand voneinander angeordnet.

Zwischen jeweils zwei Zinken sowie auch rechts bzw. links des jeweils äußersten Zinkens 12 ist jeweils eine Druckrolle 20 angeordnet. Die Druckrollen 20 sind gleichmäßig voneinander beabstandet zueinander angeordnet und auch ein Abstand zu einem oder zwei benachbarten Zinken 12 ist bei allen Druckrollen 20 im Wesentlichen gleich. Ein Abstand zwischen einer jeweiligen Druckrolle 20 und einem jeweiligen benachbarten Zinken 12 liegt im Bereich zwischen 3 cm und 12 cm. Die Druckrollen 20 rollen auf dem zu bearbeitenden Boden und eine Aufstandsfläche der Druckrollen 20 auf dem zu bearbeitenden Boden ist mit der Ziffer 22 bezeichnet. Die Druckrollen können im Übrigen auch asymmetrisch angeordnet werden, dass also beispielsweise die erste Druckrolle 20 von links sehr nahe neben dem ersten Zinken 18 von links angeordnet ist, die zweite Druckrolle 20 von links aber weiter vom ersten Zinken 18 von links beabstandet ist, dafür aber wieder sehr nahe an dem zweiten Zinken 18 von links angeordnet ist.

Anhand der schematischen Darstellung der Fig. 1 ist zu erkennen, dass die Aufstandsflächen der Druckrollen 20 auf dem zu bearbeitenden Boden nur geringfügig hinter dem Eingriffspunkt 18 der Zinken 12 angeordnet sind. Werden nun Pflanzenreste, beispielsweise Strohhalme, von den Zinken 12 mitgenommen, so ragen diese Pflanzenreste dann rechts und links über die jeweiligen Zinken 12 hinaus. Dort können sie von den auf dem Boden abrollenden Druckrollen 20 ergriffen werden, dadurch relativ zum Boden zeitweise fixiert und dadurch unter bzw. seitlich aus den Zinken 12 herausgezogen werden.

Ein seitlicher Abstand zwischen den Aufstandsflächen 22 der Druckrollen 20 und den Aufstandsflächen 18 der Zinken 12 kann variabel sein, beispielsweise um den Striegel 10 auf die zu erwartenden Abmessungen von Pflanzenresten einstellen zu können. Es ist beispielsweise dann auch möglich, rechts bzw. links von den Zinken 12 unterschiedliche Abstände zu den benachbarten Druckrollen 20 zu wählen.

Die Darstellung der Fig. 2 zeigt in einer Seitenansicht einen Zinken 12 sowie eine Druckrolle 20 des Striegels 10 der Fig. 1. Auch in dieser Seitenansicht ist zu erkennen, dass die Eingriffspunkte 18 der Zinken 12 unmittelbar vor den Aufstandsflächen 22 der Druckrollen 20 angeordnet sind. Wie ausgeführt, werden Pflanzenreste, die sich dann in einem Bereich 24 vor dem auf die Bodenoberfläche 26 eingreifenden freien Ende des Zinkens 12 ansammeln, mittels der Druckrollen 20 ergriffen und dadurch unter dem Zinken 12 herausgezogen werden. Das freie Ende der Zinken 12 kann dann dabei auch in oder entgegen der Bewegungsrichtung 16 abgebogen sein. Ein in den Boden bzw. die Bodenoberfläche 26 eingreifender Abschnitt des Zinkens 12 ist dabei gestrichelt dargestellt. Wie Fig. 2 zu entnehmen ist, besteht der Zinken 12 aus einem gebogenen Draht mit einem ersten geradlinigen Abschnitt 13, der an der Haltestange 14 festgelegt ist. Auf den Abschnitt 13 folgt ein wendelförmiger Federabschnitt 15, an den sich dann wiederum ein geradliniger Abschnitt 17 anschließt, dessen freies Ende dann in die Bodenoberfläche 26 eingreift. Durch den Federabschnitt 15 kann der geradlinige Abschnitt 17 in und entgegen der Bewegungsrichtung 16 schwenken. Wird der Striegel 10, siehe Fig. 1, in der Bewegungsrichtung 16 über die Bodenoberfläche 26 bewegt, so wird der geradlinige Abschnitt 17 in die in Fig. 2 dargestellte Position ausgelenkt. Wie zu erkennen ist, liegt in der Darstellung der Fig. 2, die eine Seitenansicht senkrecht zur Bewegungsrichtung 16 darstellt, eine hintere Begrenzung des geradlinigen Abschnitts 17 tangential an einem Außenumfang bzw. einem Umkreis der Druckrolle 20 an. Wie im Zusammenhang mit Fig. 1 leicht festzustellen ist, liegt die hintere Begrenzung des geradlinigen Abschnitts 17 dabei nur in der Projektion der Fig. 2 an dem Umkreis der Druckrolle 20 an, tatsächlich ist der Zinken 12 ja zwischen zwei benachbarten Druckrollen 20 angeordnet. Beispielsweise kann eine Position bzw. eine Drehstellung der Haltestange 14 eingestellt werden, um eine Position des geradlinigen Abschnitts 17 im Fahrbetrieb so einzustellen, wie dies in Fig. 2 zu erkennen ist.

Die Einstellung der Fig. 2 wird gewählt, wenn auf der zu bearbeitenden Bodenoberfläche lediglich wenig oder stark zerkleinerte Pflanzenrückstände aufliegen. In der Seitenansicht steht der Zinken 18 im virtuellen Berührungspunkt 19 genau tangential an dem Außenumfang der Druckrolle 20 an. Der Abstand des Punktes 19 von der Bodenoberfläche 26 gibt an, wie hoch sich das Pflanzenmaterial und lockerer Boden vor dem Striegel bzw. Zinken 17 anstauen kann, bevor ihn die Druckrolle 20 erfasst und nach hinten, in der Fig. 2 nach links, befördert. Der Bodenanstau in der Höhe bis zum Punkt 19 ist ein Anhaltspunkt für die einebnende Wirkung des Striegels auf der Bodenoberfläche 26. Wenn Pflanzenrückstände vorhanden sind, dann kann sich vor dem Zinken 17 ein Polster aus Pflanzenrückständen aufbauen, das in der Höhe langsam anwächst. Sobald dieses Polster an Pflanzenrückständen von unten her nach oben wachsend aber den Punkt 19 erreicht hat, wird es von der Druckrolle 20 am Zinken 17 entlang nach unten in Richtung auf die Bodenoberfläche 26 und dann mit dem Abrollen der Druckrolle 20 auf der Bodenoberfläche 26 nach hinten befördert.

Die Darstellung der Fig. 3 zeigt eine weitere Ausführungsform eines erfindungsgemäßen Striegels, wobei die Darstellung der Fig. 3 ähnlich zur Darstellung der Fig. 2 ist und daher lediglich die Unterschiede zu Fig. 2 erläutert werden.

Der Zinken 12 ist bei der Ausführungsform der Fig. 3 so eingestellt worden oder in einer Weise ausgebildet, dass der geradlinige Abschnitt 17 in den Umkreis der Druckrolle 20 hineinragt. In der Projektion der Fig. 3 gesehen bildet der geradlinige Abschnitt 17 somit eine Sekante an den Außenumfang bzw. den Umkreis der Druckrolle 20. Auch Fig. 3 zeigt den Zustand des Zinkens 12 während einer Bewegung in der Bewegungsrichtung 16, also während einer Bearbeitung einer Bodenoberfläche 26.

Die gemäß Fig. 3 dargestellte Einstellung des Zinkens 18 und der Druckrolle 20 wird gewählt, wenn auf der zu bearbeitenden Bodenoberfläche 26 größere Mengen an Pflanzenrückständen, insbesondere Stroh, aufliegen und insbesondere auch dann, wenn längere Strohreste auf der Bodenoberfläche 26 aufliegen. Die einebnende Wirkung des Striegels bzw. der Zinken 18 ist dann zwar geringer, weil sich das untere, freie Ende des Zinkens 18 auf Höhe des Eingriffsbereichs der Druckrolle 20 befindet und Pflanzenrückstände dort damit kontinuierlich weggezogen werden. Der Punkt 19, an dem in diesem Fall der geradlinige Abschnitt 17 den Außenumfang der Druckrolle 20 von oben her kommend das erste Mal schneidet, liegt im Vergleich zu dem Punkt 19 der Fig. 2 sehr hoch, so dass die Druckrolle 20 auch Pflanzenrückstände erfasst, die sich vor dem Zinken 18 auftürmen und diese dadurch nach unten fördert. Der gesamte untere Abschnitt des Zinkens 18, also in der Darstellung der Fig. 3 von Punkt 19 an abwärts, befindet sich dadurch ständig im Einflussbereich der Druckrolle 20, so dass die sich vor dem Zinken 18 ansammelnden Pflanzenrückstände in Bewegung bleiben und ständig durch die Druckrolle 20 abgefördert werden.

Den Ausführungsformen der Fig. 2 und Fig. 3 ist dabei gemeinsam, dass in dem Bereich 24 vor dem jeweiligen Eingriffspunkt 18 des geradlinigen Abschnitts 17 des jeweiligen Zinkens 12 angesammeltes Pflanzenmaterial durch die den Zinken 12 benachbarten Druckrollen 20 ergriffen und unter dem Zinken herausgezogen wird.

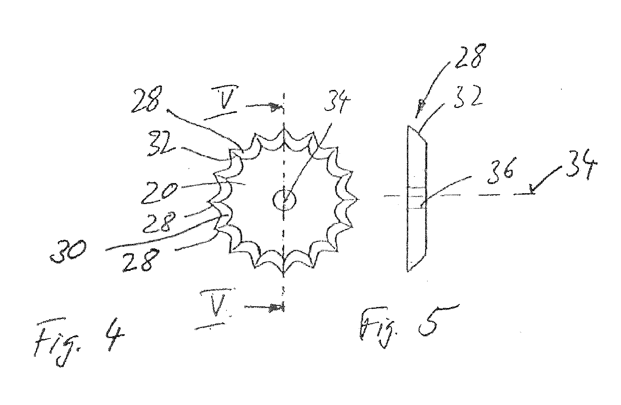

Die Darstellung der Fig. 4 zeigt eine Draufsicht auf eine Druckrolle 20, wie sie bei einer bevorzugten Ausführungsform der Erfindung eingesetzt wird. Die Druckrolle 20 ist als sogenannter Zackenring ausgebildet, wobei die Zacken 28 jeweils prismenförmig ausgebildet sind und die Täler 30 zwischen den einzelnen Zacken ausgerundet sind. Wie in der Schnittansicht der Fig. 4 auf die Schnittebene V-V in Fig. 4 zu erkennen ist, fallen die äußeren Kanten 32 der Zacken 28 einseitig schräg in Richtung einer Drehachse 34 der Druckrolle 20 hin ab. In der Schnittansicht entsteht dadurch eine pultdachförmige Gestaltung der Zacken 28 bzw. der äußeren Kanten 32 der Zacken 28.

Die Druckrollen 20 sind mit einer konzentrischen Lagerbohrung 36 versehen, mit der sie, siehe auch Fig. 2, auf einem Lagerring 38 einer gemeinsamen Haltestange 14 drehbar gelagert sind. Die Druckrollen 20 können aus Kunststoff, Stahlguss, Aluminiumguss oder dergleichen ausgebildet sein. Bei einer Ausbildung als Kunststoffwalze können die Druckrollen 20 so ausgebildet werden, dass sie im Betrieb leicht walken. Zusammen mit den ausgerundeten Tälern 30 zwischen den Zacken 28 trägt dies zu einer sehr geringen Verschmutzungsanfälligkeit bei, da auch feuchter Boden nicht an der Oberfläche der Druckrollen 20 klebt.

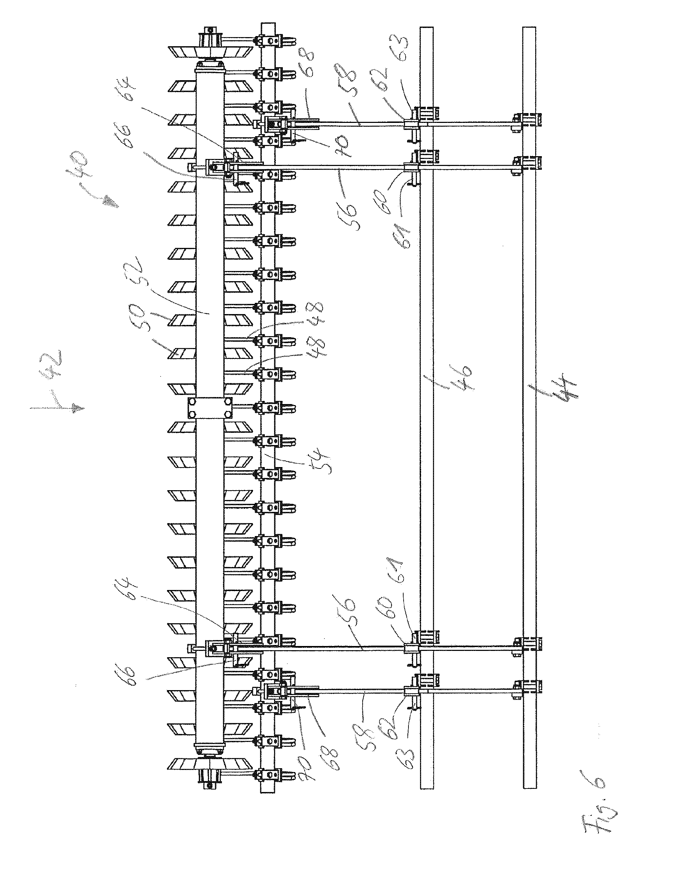

Die Darstellung der Fig. 6 zeigt eine Ausführungsform eines erfindungsgemäßen Striegels 40 in einer Ansicht von oben. Der Striegel 40 wird entlang einer Bewegungsrichtung 42 über eine zu bearbeitende Bodenoberfläche gezogen. Ein Zugfahrzeug ist in Fig. 6 nicht dargestellt, lediglich ein erster Querträger 44 und ein zweiter Querträger 46 eines Maschinengestells sind in Fig. 6 dargestellt. Die beiden Querträger sind parallel zueinander und auf gleicher Höhe angeordnet sowie in der Bewegungsrichtung 42 voneinander beabstandet. Das Maschinengestell bzw. die Querträger 44, 46 sind mit einem Zugfahrzeug verbunden.

Der Striegel 40 weist, wie der anhand der Fig. 1 bis 5 beschriebene Striegel 10, quer zur Bewegungsrichtung 42 nebeneinander angeordnete federnde Zinken 48 und mehrere Druckrollen 50 auf, wobei die Druckrollen 50 in der Bewegungsrichtung 42 gesehen hinter den Zinken 48 angeordnet sind. Pflanzenrückstände, die sich vor den Zinken 48 auftürmen, können dadurch mittels der Druckrollen 50 erfasst und durch die Druckrollen 50 von den Zinken 48 abgefördert werden. Größere Ansammlungen von Pflanzenrückständen vor den Zinken 48 können dadurch verhindert werden.

Die Druckrollen 50 sind an einer ersten Haltestange 52 angeordnet und die Zinken sind an einer zweiten Haltestange 54 angeordnet. Die erste Haltestange 52 ist mittels zweier, identisch ausgebildeter Träger 56 mit dem ersten Querträger 44 des Maschinengestells verbunden. Die zweite Haltestange 54, an der die Zinken 48 angeordnet sind, ist ebenfalls mittels zweier identisch ausgebildeter Träger 58 mit der ersten Haltestange 44 des Maschinengestells verbunden. Die Träger 56, 58 sind jeweils an der zweiten Haltestange 46 zwischen zwei Verstellblechen 60 geführt. Die Verstellbleche 60 weisen jeweils mehrere Durchgangsöffnungen zum Durchstecken eines oder mehrerer Einstellstifte 62 auf. Die Träger 56, 58 sind jeweils schwenkbar an der ersten Haltestange 44 angelenkt und können über die Verstellbleche 60 und die Stifte 62 in einer Schwenkposition festgelegt werden. Werden die Stifte 62 entfernt oder beispielsweise außerhalb des Bewegungsbereichs der Träger 56, 58 eingesteckt, können die Träger 56, 58 sich relativ zu den Verstellblechen 60 frei bewegen. Eine solche Einstellung, also ohne die Stifte 62, wird vorgenommen, wenn die Zinken 48 und die Druckrollen 50 nur durch ihr Eigengewicht belastet über die zu bearbeitende Bodenoberfläche gezogen werden sollen. An dem in der Bewegungsrichtung 42 hinten liegenden Ende des Trägers 56 ist die erste Haltestange 52, an der die Druckrollen 50 angeordnet sind, schwenkbar angeordnet. Hierzu ist ein Schwenkbeschlag 64 vorgesehen und eine Schwenkstellung der ersten Haltestange 52 zum Träger 56 kann mittels eines Stifts 66 festgelegt werden.

In gleicher Weise ist die zweite Haltestange 54, an der die Zinken 48 angeordnet sind, an dem in Fahrtrichtung hinten liegenden Ende der Träger 58 jeweils mittels eines Schwenkbeschlags 68 schwenkbar angeordnet und eine Schwenkstellung der zweiten Haltestange 54 relativ zu den Trägern 58 kann mittels eines Stiftes 70 fixiert werden.

Durch die Verschwenkbarkeit der Haltestangen 52, 54 zu den Trägern 58 bzw. 56 kann eine Aufstandsfläche der Druckrollen 50 in und entgegen der Bewegungsrichtung sowie auch ein Eingriffspunkt der Zinken 48 an der Bodenoberfläche in und entgegen der Bewegungsrichtung 42 verstellt werden. Darüber hinaus kann ein Neigungswinkel der Zinken 48 sowie auch eine Vorspannung der Zinken 48 bzw. eine Belastung der Zinken 48 in Richtung auf die Bodenoberfläche eingestellt werden. Dies deshalb, da die Zinken 48 ja jeweils einen Federabschnitt aufweisen.

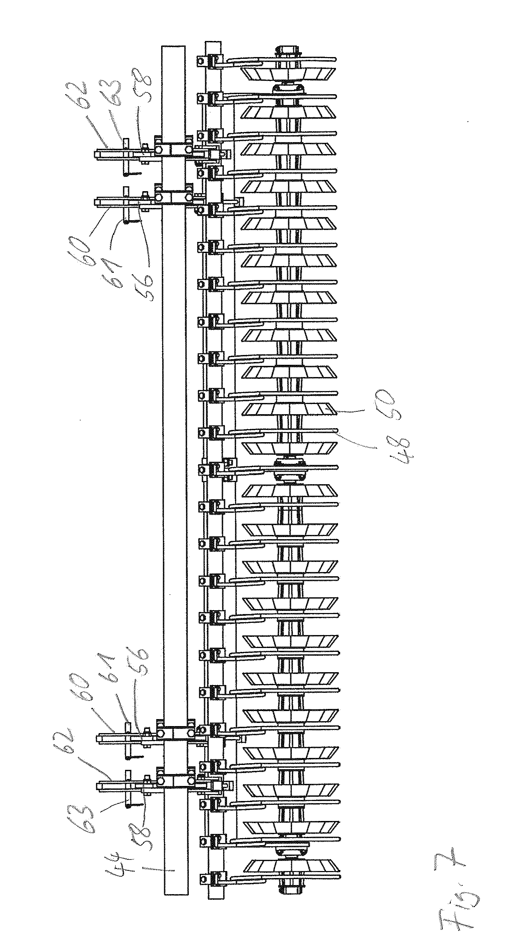

Die Darstellung der Fig. 7 zeigt den Striegel 40 der Fig. 6 in einer Ansicht von vorne, also entgegen der Fahrtrichtung 42 in Fig. 6. Zu erkennen ist der erste Querträger 44 des Maschinengestells und die Verstellvorrichtungen 60 mit den Stiften 61, die zur Einstellung einer Belastung auf die Träger 56 dienen. Wie erläutert wurde und wie Fig. 6 zu entnehmen ist, verbinden die Träger 56 die erste Haltestange 52, an der die Druckrollen 50 angeordnet sind, mit der ersten Haltestange 44 des Maschinengestells.

Weiterhin sind die Verstellvorrichtungen 62 mit den Stiften 63 zu erkennen, mit denen eine Bewegung der Träger 58 eingeschränkt werden kann. Wie Fig. 6 zu entnehmen ist, verbinden die Träger 58 die zweite Haltestange 54, an denen die Zinken 48 angeordnet sind, mit der ersten Haltestange 44.

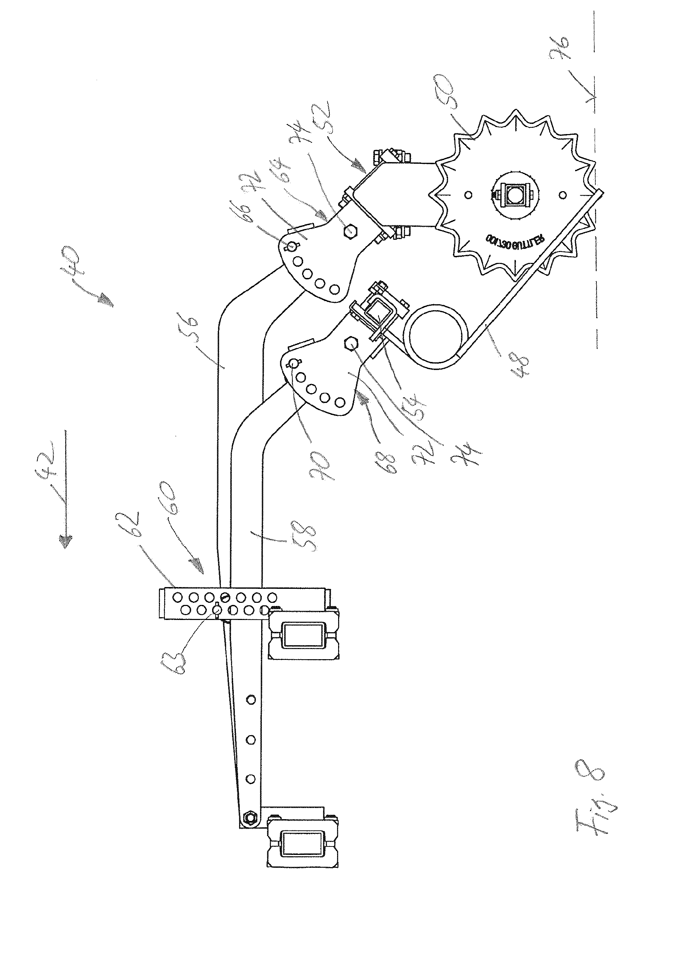

Die Verstellvorrichtungen 60, 62 sind identisch aufgebaut und auch die Stifte 61, 63 sind identisch. Die Träger 56, 58 sind jeweils aus einem stabilen Stahlblech gefertigt und sind zwischen zwei Lochblechen der Verstellvorrichtungen 60, 62 aufgenommen, siehe auch Fig. 8. Die Stifte 61, 63 werden dann durch die Lochbleche der Verstellvorrichtungen 60, 62 hindurchgesteckt und beschränken dadurch die Bewegung der Träger 56, 58 relativ zu den Verstellvorrichtungen 60, 62.

Wie Fig. 8 zu entnehmen ist, beschränken die Stifte 61, 63 eine Schwenkbewegung der Träger 56, 58 nach oben. Wenn, ausgehend von dem Zustand der Fig. 8, der

Zinken 48 über eine Bodenwelle läuft, drückt der Zinken 48 den Träger 58 nach oben. Diese Bewegung nach oben wird aber durch den Stift 63 verhindert, an dem die Oberseite des Trägers 58 anschlägt.

In gleicher Weise begrenzen die Stifte 61 eine Schwenkbewegung des Trägers 56 nach oben. Mittels der Verstellvorrichtungen 60 und der Stifte 61 kann somit eine Schwenkbewegung der Träger 56 nach oben verhindert werden und letztendlich kann dadurch eine Belastung der Druckrollen 50 in Richtung auf eine zu bearbeitende Bodenoberfläche eingestellt werden. Mittels der Verstellvorrichtungen 62 und der Stifte 63 kann eine Schwenkbewegung der Träger 58 nach oben eingeschränkt werden und dadurch lässt sich eine Belastung der Zinken 48 in Richtung auf die Bodenoberfläche einstellen.

Der Darstellung der Fig. 8 ist zu entnehmen, dass mittels der Verstellvorrichtungen 60, 62 sowohl die Druckrollen 50 als auch die Zinken 48 vollständig von einer Bodenoberfläche abgehoben werden, indem die Träger 56, 58 nach oben geschwenkt und dann mit ihrer Unterseite auf die Stifte 61, 63 aufgelegt werden.

Die Darstellung der Fig. 8 zeigt auch den Aufbau der Verstellvorrichtung 64, die einen Einstellstift 66 aufweist und mit der die erste Haltestange 52, an der die Druckrollen 50 angeordnet sind, schwenkbar mit dem Träger 56 verbunden ist. Die Verstellvorrichtung 64 weist zwei parallel zueinander angeordnete Lochbleche 72 auf, zwischen denen das Ende des Trägers 56 aufgenommen ist. Die Lochbleche 72 tragen mehrere, entlang eines Kreisbogens angeordnete Löcher, durch die der Stift 66 gesteckt werden kann. Der Kreisbogen auf dem die Löcher angeordnet sind, hat als Mittelpunkt eine Schwenkachse 74, die durch einen Bolzen definiert ist, der sich sowohl durch die Lochbleche 72 als auch das Ende des Trägers 56 hindurch erstreckt.

Ist der Stift 66 aus den Lochblechen 72 herausgezogen, kann die erste Haltestange 52 um eine quer zur Bewegungsrichtung 42 und parallel zur Bodenoberfläche liegende Schwenkachse, in Fig. 8 also in die Zeichenebene hinein, geschwenkt werden. Anhand der Fig. 8 ist erkennbar, dass durch eine solche Schwenkbewegung eine Bodenaufstandsfläche der Druckrollen 50 auf einer in Fig. 8 gestrichelt dargestellten Bodenoberfläche 76, in und entgegen der Bewegungsrichtung 42 verstellt werden kann. Wenn die gewünschte Position der Druckrollen 50 erreicht ist, wird der Stift 66 in die passenden Löcher in den Lochblechen 72 gesteckt, um die erreichte Position der Druckrollen 50 zu fixieren. Es genügt dabei, lediglich einen Stift 66 pro Verstellvorrichtung 64 zu verwenden, da dann, wenn der Striegel 40 in der Bewegungsrichtung 42 gezogen wird, die Druckrollen 50 nach hinten, in Fig. 8, also nach rechts gedrückt werden und dadurch der Stift 66 genügt, um eine Bewegung der ersten Haltestange 52 um den Bolzen 74, in der Fig. 8 gegen den Uhrzeigersinn, zu blockieren.

Die Verstellvorrichtung 68, die die zweite Haltestange 54 schwenkbar mit dem Träger 58 verbindet, ist identisch zur Verstellvorrichtung 64 aufgebaut. Auch das Ende des Trägers 58 ist zwischen zwei Lochblechen 72 aufgenommen und mittels des Stifts 70 lässt sich eine Schwenkposition der zweiten Haltestange 54 um den Bolzen 44 herum und relativ zum Träger 58 einstellen. Wie Fig. 8 zu entnehmen ist, lässt sich durch eine Verschwenkung der zweiten Haltestange 54 um den Bolzen 74 herum ein Eingriffspunkt der Zinken 48 in die Bodenoberfläche 76 in und entgegen der Bewegungsrichtung 42 verschieben.

Wie bereits ausgeführt wurde, erlaubt der Striegel 40 eine vollständig getrennte und voneinander unabhängige Einstellung der Druckrollen 50 und der Striegel 48. Beispielsweise wird zunächst eine Belastung der Zinken 48 in Richtung auf die Bodenoberfläche 76 mittels der Verstellvorrichtung 62 und dem Stift 63 eingestellt. Darüber hinaus kann mittels der Verstellvorrichtung 68 eine Neigung der Zinken 48 zur Bodenfläche 76 eingestellt werden. Ist eine Bedienperson mit der Wirkung der Zinken 48 auf die Bodenoberfläche 76 zufrieden, kann er dann, ohne die Einstellung der Zinken 48 zu verändern, eine Bodenaufstandsfläche der Druckrollen 50 mittels der Verstellvorrichtung 64 relativ zu den Zinken 48 einstellen und ggf. kann er auch eine Belastung der Druckrollen 50 in Richtung auf die Bodenoberfläche 76 mittels der Verstellvorrichtungen 60 einstellen. Selbstverständlich können diese Einstellungen auch in umgekehrter Reihenfolge vorgenommen werden.

## Patentansprüche

1. Striegel für Bodenbearbeitungsgeräte, insbesondere Sämaschinen, mit mehreren, quer zur Bewegungsrichtung des Bodenbearbeitungsgeräts nebeneinander angeordneten, federnden Zinken (12) mit jeweils einem Federabschnitt und einem im Wesentlichen geradlinigen Abschnitt, der sich ausgehend vom Federelement bis zu einem Eingriffspunkt mit einer Bodenoberfläche erstreckt, **gekennzeichnet durch** mehrere Druckrollen (20), die so zu den Zinken (12) angeordnet sind, dass im Fahrbetrieb und in einer Seitenansicht senkrecht zur Bewegungsrichtung gesehen, der im Wesentlichen geradlinige Abschnitt der Zinken tangential an einem Umkreis der Druckrollen anliegt oder in den Umkreis hineinragt, wobei die Druckrollen (20) in Bewegungsrichtung gesehen hinter den Zinken (12) angeordnet sind und wobei Mittel zum Verschieben der Aufstandsflächen (22) der Druckrollen (209) relativ zu den Eingriffspunkten der Zinken (12) wenigstens in und entgegen der Bewegungsrichtung (16) vorgesehen sind.

2. Striegel nach Anspruch 1, **dadurch gekennzeichnet, dass** zu beiden Seiten eines Zinkens (12) jeweils eine Druckrolle (20) angeordnet ist.

3. Striegel nach Anspruch 1 oder 2, **dadurch gekennzeichnet, dass** die Druckrollen (20) und die Zinken (12) quer zur Bewegungsrichtung (16) gesehen jeweils fluchtend zueinander angeordnet sind, wobei zwischen zwei Zinken (12) jeweils eine Druckrolle (20) angeordnet ist.

4. Striegel nach einem der vorstehenden Ansprüche, **dadurch gekennzeichnet, dass** quer zur Bewegungsrichtung gesehen die Aufstandsflächen (22) der Druckrollen (20) von den Eingriffspunkten (18) der Zinken (12) in einem Bereich zwischen 3 cm und 10 cm beabstandet sind.

5. Striegel nach einem der vorstehenden Ansprüche, **dadurch gekennzeichnet, dass** die Druckrollen (20) drehbar an einer gemeinsamen, quer zur Bewegungsrichtung (16) angeordneten ersten Haltestange (40) angeordnet sind und die Zinken (12) an einer gemeinsamen, quer zur Bewegungsrichtung (16) angeordneten zweiten Haltestange (14) angeordnet sind, wobei die erste und die zweite Haltestange (40, 14) relativ zu einem Maschinengestell unabhängig voneinander einstellbar sind.

6. Striegel nach Anspruch 5, **dadurch gekennzeichnet, dass** die erste Haltestange (40) mittels wenigstens eines Trägers gehalten ist, der sich von einem Maschinengestell aus nach hinten in den Bereich zwischen den Zinken (12) erstreckt.

7. Striegel nach Anspruch 5 oder 6, **dadurch gekennzeichnet, dass** die zweite Haltestange (14) mittels wenigstens eines Trägers gehalten ist, der sich von einem Maschinengestell aus nach hinten erstreckt.

8. Striegel nach wenigstens einem der Ansprüche 5 bis 7, **dadurch gekennzeichnet, dass** die erste Haltestange und/oder die zweite Haltestange schwenkbar an einem freien Ende des jeweils zugeordneten Trägers angeordnet und relativ zum Träger in unterschiedlichen Winkelstellungen festlegbar ist.

9. Striegel nach Anspruch 7 oder 8, **dadurch gekennzeichnet, dass** der Träger für die erste Haltestange und/oder der Träger für die zweite Haltestange schwenkbar an einem ersten Querträger des Maschinengestells angelenkt ist und in unterschiedlichen Höhenpositionen an einem zweiten, vom ersten Querträger beabstandeten Querträger des Maschinengestells festlegbar ist.

10. Striegel nach wenigstens einem der vorstehenden Ansprüche, **dadurch gekennzeichnet, dass** Mittel zum Einstellen einer Belastung der Druckrollen (20) und/oder Mittel zum Einstellen einer Belastung der Zinken (12) in Richtung auf den zu bearbeitenden Boden (26) vorgesehen sind.

11. Striegel nach Anspruch 10, **dadurch gekennzeichnet, dass** eine Belastung der Druckrollen (20) und eine Belastung der Zinken (12) unabhängig voneinander einstellbar ist.

12. Striegel nach einem der vorstehenden Ansprüche, **dadurch gekennzeichnet, dass** die Druckrollen (20) auf ihrem Außenumfang mit Zacken (28) versehen sind.

13. Striegel nach Anspruch 12, **dadurch gekennzeichnet, dass** die Zacken (28) prismenförmig ausgebildet sind und eine jeweils radial außenliegende Kante (32) der Zacken (28) in Richtung einer Drehachse (34) der Druckrollen (20) schräg zu einer Seite hin abfällt.

14. Striegel nach wenigstens einem der vorstehenden Ansprüche, **dadurch gekennzeichnet, dass** der Striegel (10) Teil einer Sämaschine ist, wobei die Druckrollen (20) so angeordnet sind, dass sie auf den von der Sämaschine erzeugten Saatreihen laufen.
